Europäisches Patentamt

European Patent Office

Office européen des brevets

(19)

(11) Veröffentlichungsnummer: **0 119 991**
**B1**

## (12) EUROPÄISCHE PATENTSCHRIFT

(45) Veröffentlichungstag der Patentschrift:
02.11.88

(51) Int. Cl.⁴: **B 67 D 3/04**

(21) Anmeldenummer: **84890055.1**

(22) Anmeldetag: **21.03.84**

(54) Zapfventil, insbesondere für Grossbehälter.

(30) Priorität: **22.03.83 AT 996/83**

(43) Veröffentlichungstag der Anmeldung:
**26.09.84 Patentblatt 84/39**

(45) Bekanntmachung des Hinweises auf die Patenterteilung:
**02.11.88 Patentblatt 88/44**

(84) Benannte Vertragsstaaten:
**AT BE CH DE FR GB IT LI LU NL SE**

(56) Entgegenhaltungen:
**CH-A-14 699**
**CH-A-191 204**
**CH-A-263 232**
**CH-A-332 434**
**DE-A-1 482 677**
**DE-C-51 477**
**GB-A-23 667**
**US-A-808 910**
**US-A-1 019 317**
**US-A-1 207 505**
**US-A-1 220 753**
**US-A-1 231 602**
**US-A-2 362 379**
**US-A-2 630 131**
**US-A-4 436 125**

(73) Patentinhaber: **Girlinger & Co. Gesellschaft m.b.H.,
A-4132 Lembach Nr. 170 (AT)**

(72) Erfinder: **Girlinger, Hans, A-4132 Lembach Nr. 170
(AT)**

(74) Vertreter: **Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)**

## Beschreibung

Die Erfindung betrifft ein Zapfventil, insbesondere für Großbehälter, nach dem Oberbegriff des Patentanspruches 1.

Ein derartiges Zapfventil ist aus Fig. 7 der eigenen DE-A-1 482 677 bekannt. Dabei ist ein rohrförmiges Gehäuse vorgesehen, dessen die Einlaßöffnung aufweisendes Ende zum Einführen in einen Behälter bestimmt ist und bis zu einem Absatz mit einem Gewinde versehen ist, das in ein entsprechendes Gegengewinde in einem Innenrohr an einer Gehäuseöffnung eingeschraubt werden kann. Der äußere Teil des rohrförmigen Gehäuses ist vom Absatz weg abgesetzt erweitert und nimmt eine zugleich auch der Gleitführung des rohrförmigen Sperrkörpers dienende rohrförmige Dichtung auf. Mit Abstand vom Absatz ist am erweiterten Teil des Gehäuses eine Flanschplatte vorgesehen. Außen stützt sich auf der Dichtung bzw. am Rohrende eine Feder ab, die in einen Kappenteil des rohrförmigen Sperrkörpers eingreift, welcher Kappenteil das erweiterte Rohrende außen abdeckt. Neben der Kappe sitzt am rohrförmigen Sperrkörper ein Betätigungshebel, mit dessen Hilfe der rohrförmige Sperrkörper in seiner Längsrichtung verschoben werden kann und der damit die Betätigungshandhabe des Zapfventiles bildet. Der die Betätigungshandhabe darstellende Hebel trägt einen Haken, der in die Flanschplatte eingehängt werden kann, so daß der Sperrkörper in seiner der Öffnungsstellung des Ventiles entsprechenden Lage feststellbar ist. Um dies zu ermöglichen, muß die Flanschplatte in der Gebrauchsstellung mit Abstand von der Behälterwand liegen. Es ist nur eine Schiebeverstellung des rohrförmigen Sperrkörpers möglich. An den Anbringungsbereich der Handhabe schließt das Ablaufrohr an, dessen Ende aus der horizontalen Gebrauchsstellung des Rohres leicht nach unten geneigt ist. Das bekannte Zapfventil kann an Stelle üblicher Faßpipen verwendet werden. Es besitzt eine große Baulänge und neigt zum Verkleben des Sperrkörpers in der Führungsbohrung.

Aus der CH-A-191 204 ist es eine Faßpipe bekannt, bei der ein aus Holz gefertigter Pipenkörper eine nicht ganz bis zum Ende des Kopfes reichende Längsbohrung und eine im Durchmesser größere Querbohrung aufweist, die nur nach unten offen ist, sich nach außen konisch erweitert und einen konischen Einsatzteil aufnimmt, der gegebenenfalls ähnlich einer Holzschraube ausgebildet ist und die Führung für den Sperrkörper bildet. Bei einem anderen bekannten Zapfventil ist ein eigener kappenartiger auf das Ende eines Holzrohres aufsetzbarer Gehäuseteil vorgesehen, der einen seitlichen Ansatzteil trägt, in dem der Sperrkörper geführt ist. In beiden Fällen ergeben sich Probleme bei der Abdichtung zwischen dem Gehäuseteil des Ventiles und dem Holzteil der Pipe. Vor allem die konische Querbohrung nach der CH-A-191 204 wird sich durch das Aufquellen des Holzes beim Flüssigkeitszutritt in ihrer Form verändern, so daß Undichtheiten entstehen. Wegen der meist rechtwinkeligen Umleitung des Flüssigkeitsstromes innerhalb des Pipenkörpers von der Längsbohrung in das Rohr des Sperrkörpers ergeben sich ungünstigere Strömungsverhältnisse bei dickflüssigeren Medien. Alle bekannten Zapfventile sind gegen Verschmutzung, beispielsweise durch Trebernrückstände bei Wein- oder Obstweinfässern empfindlich und neigen zum Nachtropfen wegen eines nicht einwandfreien Schließens des Ventiles und auch dann, wenn nach der genannten DE-A-1 482 677 zwischen dem Bereich der Einlaßöffnung und dem Auslaß lange im wesentlichen horizontal verlaufende Leitungswege vorhanden sind, aus denen Flüssigkeitsreste nur langsam abfließen. Ein Vorteil der Zapfventile besteht darin, daß meist eine leichtgängige Betätigung möglich ist, wobei aber anderseits nur nach der genannten DE-A-1 482 677 für die Entnahme größerer Flüssigkeitsmengen eine Feststellung des Sperrkörpers in seiner der Öffnungsstellung entsprechenden Lage vorgenommen werden kann. Bei den übrigen Faßpipen und Faßverschlüssen ist der Auslaßquerschnitt des Ventiles klein im Verhältnis zur Ablaßöffnung des Fasses. Es ergeben sich bei dickflüssigeren Medien Ableitschwierigkeiten und die meisten bekannten Zapfventile stehen in der Montagestellung weit über den Faßkörper vor.

Zu erwähnen ist, daß es an sich bekannt ist, bei Ventilen, die in einem Flüssigkeitsweg liegen, Siebe vorzusehen, um eine Verschmutzung des Ventiles zu verhindern. Entsprechende Konstruktionen sind etwa aus der US-A-808 910 und der US-A-2 362 379 bekannt.

Aufgabe der Erfindung ist die Schaffung eines Zapfventiles der genannten Art, das an verschiedene Verwendungzwecke und Aufgaben angepaßt werden kann, einen einfachen Aufbau besitzt, preisgünstig herstellbar und in der Bedienung leichtgängig ist, eine lange Lebensdauer aufweist und in der Schließstellung sicher dicht hält. Ferner soll eine Feststellung des Sperrkörpers in der Öffnungsstellung wahlweise und mit einfachen Mitteln möglich sein. Eine weitere Aufgabe der Erfindung besteht in der Schaffung eines Zapfventiles, das mit nur geringem überstand an Fässern und anderen Großbehältern befestigt werden kann, die Freigabe eines im Vergleich zur Ablaßöffnung des Fasses großen Auslaßquerschnittes bei günstigen Leitungsbedingungen für die Flüssigkeit ermöglicht und das trotzdem gegen Nachtropfen gesichert werden kann.

Die gestellte Aufgabe wird durch die Merkmale des kennzeichnenden Teiles des Patentanspruches 1 gelöst. Dabei ermöglicht die Anbringung des Sperrkörpers in einem Gewindenippel eine einfachere, sichere Montage des wesentlichen Ventilteiles, der dabei mit relativ kurzer Baulänge ausführbar ist. Durch die verdrehbare Lagerung des Sperrkörpers wird es möglich, auftretende Verklebungen zu lösen, wobei eine durch Verdrehung ein- und ausrückbare Verriegelungsvorrichtung eine nur wahlweise Feststellung des Sperrkörpers in der Öffnungsstellung zuläßt. Bei unmittelbarer Montage des Zapfventiles an einem Faß wird wegen der kurzen Baulänge der Flüssigkeitsstrom beim Durchtritt durch das Ventil nur geringfügig umgeleitet und der Durchtrittsquerschnitt, den das Ventil freigibt, kann groß im Verhältnis zur jeweiligen Faßöffnung gehalten sein.

Bei der einen Ausführungsform bestimmt die relative Drehstellung von Magnet und Anker, ob eine Verriegelung in der Öffnungsstellung vorgenommen wird oder nicht. Die Verriegelung kann durch Verdrehen des Sperrkörpers mit dem von ihm getragenen Teil der Magnethalterung wieder gelöst werden. Eine bevorzugte Ausführung der anderen Art der Verriegelung entnimmt man dem Anspruch 2.

Durch die Ausführung nach Anspruch 3 wird erreicht, daß trotz der Verwendung eines hölzernen Pipenkörpers die Einschraubhalterung des Nippels nicht durch das Arbeiten des Holzes undicht werden kann, wobei überdies in einfacher Weise die Anbringung eines Fangsiebes zum Schutz des Ventiles ermöglicht wird. Günstige Ausbildung und Anbringungsarten des Siebes entnimmt man den Ansprüchen 4 und 5.

Die Ausführung nach Anspruch 6 ermöglicht das Ein- und Ausschrauben des Nippels ohne gesonderte Werkzeuge. Besteht das Betätigungsstück aus einem einfachen Querstück am Ablaufrohr, braucht man an der Nippelstirnseite nur entsprechende Rastvertiefungen für dieses Querstück vorzusehen.

Die Maßnahme nach Anspruch 7 dient für sich oder in Kombination mit weiteren Maßnahmen, etwa der Anordnung von Labyrinthdichtungen, Kolbenringen am Dichtungskörper, Ringnuten am Dichtungskörper oder im Gehäuse zur sicheren Abdichtung des Sperrkörpers in seiner Führungsbohrung und zum Verhindern des Nachtropfens.

Durch die Ausführung nach den Ansprüchen 8 und 9 wird die Montage des Einschraubnippels im Faßpipenkörper erleichtert und man kann verhindern, daß empfindliche Getränke, z. B. in der Pipenbohrung stehende Getränkeanteile, essigstichig werden.

Durch die Ausführung nach Anspruch 10 wird es in Kombination mit der drehbaren Lagerung des Sperrkörpers in der Führungsbohrung möglich, das Rohrende in der Schließstellung des Ventiles nach oben zu drehen, wodurch mit einfachsten Mitteln ein Nachtropfen der beim Schließen des Ventiles noch im Ventilrohr enthaltenen Flüssigkeit verhindert wird.

Für eine ganz oder teilweise versenkte Anbringung des Ventiles kann eine Konstruktion nach Anspruch 11 gewählt werden.

Weitere Anwendungsmöglichkeiten des Zapfventiles entnimmt man den Ansprüchen 12 und 13, wobei die Ausführung nach Anspruch 13 eine problemlose Flüssigkeitsentnahme auch aus sonst geschlossenen Behältern zuläßt.

Weitere Einzelheiten und Vorteile des Erfindungsgegenstandes entnimmt man den weiteren Unteransprüchen und der nachfolgenden Zeichnungsbeschreibung.

In der Zeichnung ist der Erfindungsgegenstand beispielsweise veranschaulicht. Es zeigt

Fig. 1 ein in Form einer Faßpipe aufgebautes Zapfventil in Seitenansicht,
Fig. 2 einen Längsschnitt zu Fig. 1,
Fig. 3 eine Vorderansicht zu Fig. 1,
Fig. 4 ein Zapfventil für ein Kunststoffaß im Längsschnitt,
Fig. 5 ebenfalls im Längsschnitt einen Zapfventil für ein Faß, bei dem der Einschraubnippel zugleich das Ventilgehäuse bildet,
Fig. 6 eine weitere Faßpipe im Teillängsschnitt,
Fig. 7 einen Querschnitt nach der Linie VII-VII der Fig. 6,
Fig. 8 eine weitere Faßpipe im Teillängsschnitt,
Fig. 9 eine Faßventil im Längsschnitt,
Fig. 10 ein Zapfventil bei seiner Verwendung an einem Ablaßschlauch eines Fasses od. dgl.,
Fig. 11 ein Zapfventil bei der Verwendung bei einer Wasserleitung und
Fig. 12 ein an der Verschlußkappe eines Kanisters oder sonstigen geschlossenen Transportbehälters angebrachtes Zapfventil.

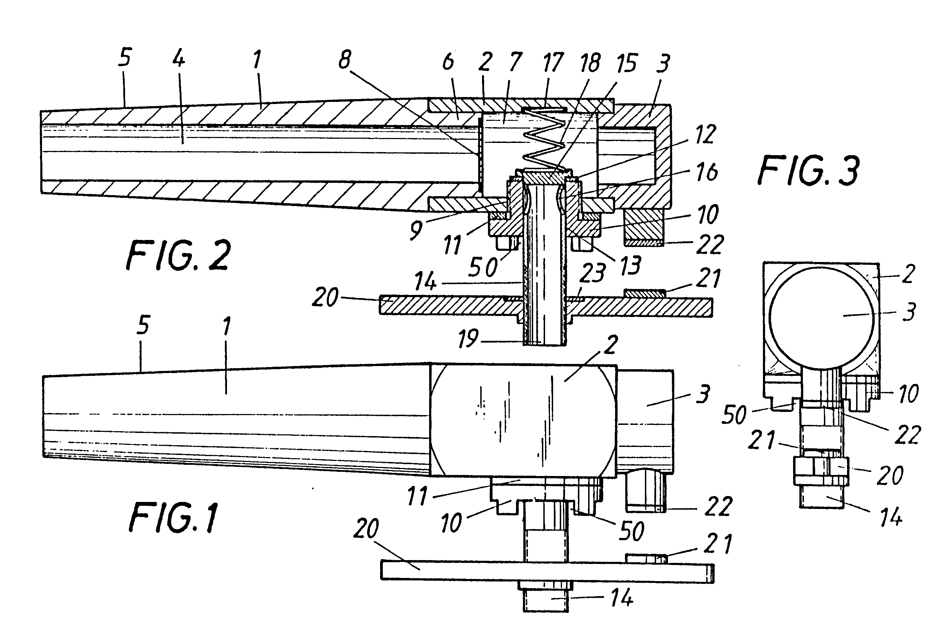

Das Zapfventil nach den Fig. 1 bis 3 bildet eine Faßpipe. Es ist ein aus den Teilen 1 bis 3 bestehender, auch als Gehäuse ansprechbarer Grundkörper vorgesehen, bei dem der Teil 1 ein mit einer Längsbohrung 4 versehener Verschleißteil aus Holz ist, der sich an der Außenseite 5 zum freien Ende konisch verjüngt. Der Teil 1 ist mit einem Ansatz 6 dicht in eine Anschlußbohrung 7 des aus Metall hergestellten Teiles 2 eingesetzt, beispielsweise eingeklebt. Der Teil 3 schließt das vordere Ende des gegenüber der Bohrung 4 vergrößerten Hohlraumes 7 des Teiles 2 ab. In das Ende des Teiles 1 ist innerhalb des Teiles 2 ein Fangsieb 8 für Rückstände z. B. Trebern eingesetzt.

Der Teil 2 besitzt an seiner Unterseite eine Gewindebohrung 9, in die ein Schraubnippel 10 unter Zwischenschaltung einer Dichtung 11 eingeschraubt ist. Das Innenende des Nippels bildet einen mit einer Dichtung 12 ausgestatteten Ventilsitz. In der Bohrung 13 des Nippels 10 ist ein rohrförmiger Sperrkörper 14 ähnlich wie ein Kolben axial verschiebbar geführt. Dieser Sperrkörper trägt an seinem inneren Ende einen Ventilteller 15 und besitzt anschließend in seiner Wandung Einlaßöffnungen 16. Eine in einer Stützvertiefung 17 des Teiles 2 abgestützte Feder 18 hat das Bestreben, den Ventilkörper 12, 15 in der Schließstellung zu halten. Das Ende des aus dem Nippel 10 an der anderen Seite herausragenden Rohres bildet eine Auslaßöffnung 19.

Am rohrförmigen Sperrkörper 14 ist als Betätigungshandhabe ein Querstück 20 befestigt, mit dessen Hilfe das Rohr 14 axial verschoben und damit das Ventil geöffnet werden kann. An dem einen Schenkel des Querstückes 20 sitzt exzentrisch gegenüber der Rohrachse ein Anker 21 für einen am Teil 3 befestigten Dauermagneten 22. Wird der Magnet 22 bei der dargestellten Drehstellung des Querstückes 20 mit dem Anker 21 in Eingriff gebracht, dann hält er das Ventil in der Öffnungsstellung. Durch Verdrehen des Querstückes 20 können Anker 21 und Magnet 22 außer Eingriff gebracht und damit die Halterung gelöst werden.

Das äußere Ende der Bohrung 13 kann abgefast sein, wobei die entstehende Erweiterung eine Dichtungspaste, z. B. Silikonpaste, aufnimmt. Am Querstück 20 ist ein Filzring 23 vorgesehen, der bei geöffnetem Ventil diese Erweiterung der Bohrung abdeckt.

Das Querstück 20 ist auch als Schlüssel zum Ein- und Ausschrauben des Nippels 10 verwendbar. Zu diesem Zweck sind am Nippel stirnseitig Rastvertiefungen 50 ausgeformt, in die das Querstück 20 paßt.

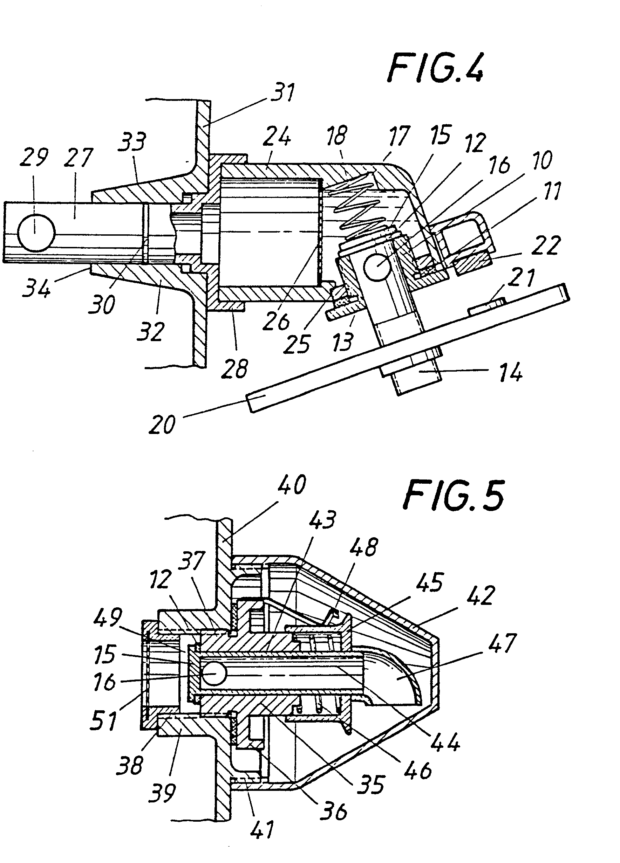

Die Teile 10 bis 23 des Zapfventiles nach den Fig. 1 bis 3 finden aber auch bei dem Ventil nach Fig. 4 Verwendung. Dieses besitzt ein rohrförmiges Gehäuse 24, das am Außenende geschlossen ist und eine Bohrung 25 aufweist, deren auch die Ventilachse bestimmende Achse stumpfwinkelig zur Achse des Rohres 24 verläuft. In das Rohr ist ein Fangsieb 26 eingesetzt. Anschließend an das rohrförmige Gehäuse 24 ist ein rohrförmiger Pipenteil 27 mit einem Flansch 28 vorgesehen.

Der rohrförmige Pipenteil 27 ist am Ende geschlossen und besitzt eine in der Gebrauchsstellung nach oben weisende Einlaßöffnung 29. Ferner ist er mit einer Ringnut zu Halterung eines Dichtungsringes 30 z. B. aus Kork versehen.

Das Faß 31 ist im Bereich der Auslaßöffnung, die durch das Zapfventil abgeschlossen wird, mit einem Rohrstutzen 32 versehen, dessen Außenseite 33 konisch ausgebildet ist. Vor der Anbringung des Zapfventiles wird auf das Ende 34 des Rohrstutzens eine Kunststoffkappe aufgesetzt, die beim Eintreiben des Teiles 27 abgestoßen wird.

Das Zapfventil nach Fig. 5 besitzt einen Schraubnippel 35 mit einem Flansch 36 und einem Gewindeende 37, das in eine Einschrauböffnung 38 in einem Rohrstutzen 39 eines Fasses 40 einschraubbar ist. Außen ist am Faß 40 ebenfalls ein Gewindestutzen 41 vorgesehen, auf den eine das gesamte Zapfventil abdeckende Kappe 42 aufgeschraubt werden kann.

In der Bohrung 43 des Nippels 35 ist wieder ein rohrförmiger Verschlußkörper 44 längsverschiebbar geführt, der mit den seitlichen Löchern 16 und dem Ventilteller 15 ausgestattet ist. Als Handhabe dient ein kappenförmiger Teil 45, in dem eine Druckfeder 46 eingesetzt ist, die sich am Nippelende abstützt. Die Kappe 45 ist auf dem über den Flansch 36 überstehenden Nippelende geführt. An das Rohr 44 schließt ein Knie 47 an. Ferner ist eine Federraste 48 vorgesehen, die die Kappe 45 in der der Öffnungsstellung des Ventils entsprechenden Einschiebestellung festhält. Nach Lösen dieser Federrast drückt die Feder 46 das Ventil wieder in seine Schließstellung.

In die Öffnung 49 des Stutzens 39 ist ein Haltering für ein Sieb 51 eingesetzt. Es wäre auch möglich, auf den Gewindestutzen 41 zu verzichten und statt der Kappe 42 eine auf den Flansch 36 des Schraubnippels 35 passende Kappe zu verwenden.

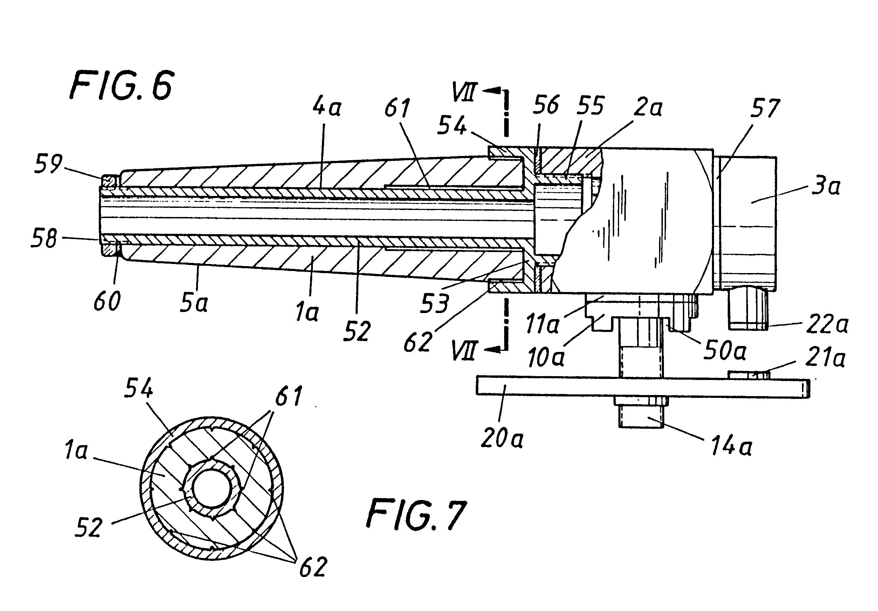

Die Faßpipe nach den Fig 5 und 6 besitzt einen ähnlichen Aufbau, wie jene nach den Fig. 1 bis 3, weshalb auch äquivalente Teile mit den gleichen Bezugszeichen, aber mit den Zusatz "a" bezeichnet wurden.

Für die Bohrung 4a des Anschlußrohres 1a ist eine rohrförmige Auskleidung 52 aus Kunststoff vorgesehen. Die Länge dieser Auskleidung 52 ist größer als jene des Holzrohres 1a. Die Auskleidung 52 trägt an einem Ende einen flanschartigen Kopfteil 53, von dem ein Bord 54 zurück über den Außenrand des Holzrohres reicht. Ferner sitzt am Kopfteil 53 ein rohrförmiger Gewindeansatz 55, der in ein Gegengewinde des Teiles 2a einschraubbar ist. Bei der Montage wird zwischen die Teile 2a und 53 ein Dichtungsring 56 eingeschoben. Ein weiterer Dichtungsring 57 wird zwischen den Teilen 2a und 3a, die ebenfalls zusammengechraubt sind, angebracht.

Das vom Kopfteil abweisende Ende 58 der rohrförmigen Auskleidung 52, das in der Montagestellung aus dem Teil 1a herausragt, trägt ein Außengewinde, auf das eine Ringmutter 59 aufgeschraubt ist, die gegebenenfalls unter Zwischenschaltung einer weiteren Dichtung 60, das Anschlußrohr 1a gegen den Kopfteil 53 verspannt.

Wie insbesondere Fig. 7 zeigt, kann die rohrförmige Auskleidung 52 wenigstens in einem Teilbereich ihrer Länge zur Verdrehsicherung des Holzteiles 1a Keilrippen od. dgl. 61 aufweisen. Ähnliche Rippen 62 sind an der Innenseite des Bordes 54 vorhanden.

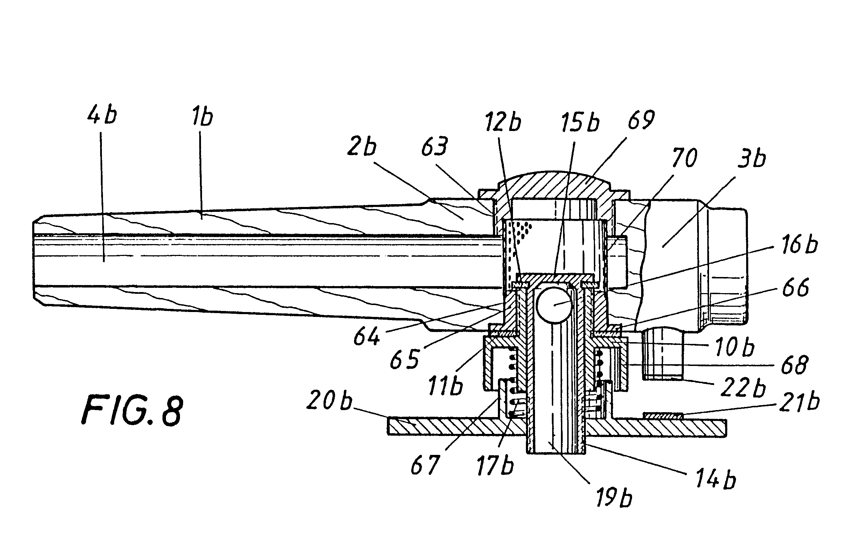

Bei der Ausführung nach Fig. 8 ist ein holzgefertigter Pipenkörper 1b vorgesehen, dessen Längsbohrung 4b als bis in den Bereich des Kopfes 3b reichende Sackbohrung ausgeführt ist. Im Bereich 2b ist im Holzteil von gegenüberliegenden Seiten her eine Querbohrung 63, 64 angebracht. Der Bohrungsbereich 64 nimmt einen Einsatzteil 65 abgedichtet auf, wobei dieser Einsatzteil mit einem Flansch 66 in den Holzteil versenkt ist und allenfalls zusätzliche Dichtungsringe zwischen Bohrung 64 und Einsatzteil 65 angebracht werden. Der Einschraubnippel 10b greift in ein Gegengewinde des Einsatzteiles 65 ein. Übereinstimmende Teile wurden mit den gleichen Bezugszeichen wie in den Fig.1 bis 3 unter Zusatz des Zeichens "b" bezeichnet. Die Ventilfeder 17b ist außen angebracht und zwischen einem hochgezogenen Bord 67 der Handhabe 20b und einem im Durchmesser größeren Bord 68 am Nippel 10b versenkt.

In den Bohrungsbereich 63 ist eine Kappe 69 dicht eingesetzt. Diese Kappe hält ein zylindrisches Sieb 70 mit allseitigem Abstand vom einschiebbaren Ventilkörper 14b, 15b. Der Teil 69 bildet einen Einsatz, auch für ihn könnte im Bedarfsfall ein ähnlich dem Einsatz 64 ausgebildeter Teil vorgesehen sein, in den er einschraubbar ist.

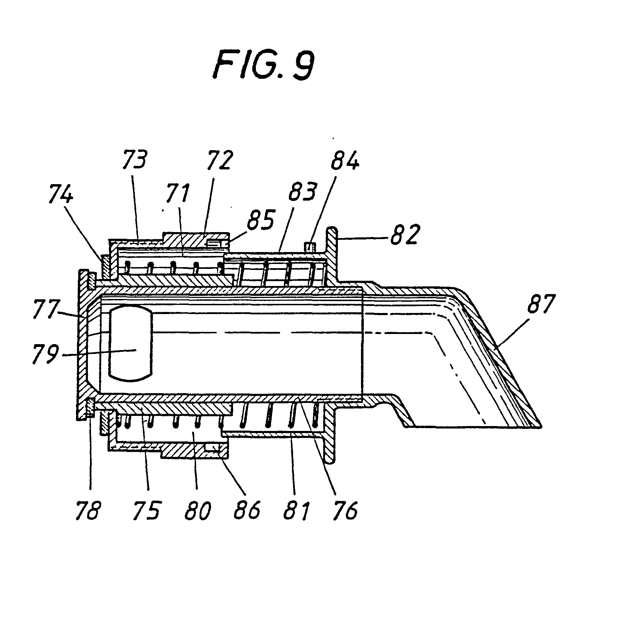

Das wieder für ähnliche Aufgaben wie das Zapfventil nach Fig. 5 bestimmte Ventil nach Fig. 9 besitzt einen napfförmigen Einschraubnippel 71, der mit einem Klauenring 72 oder einer Mutter versehen sein kann und einen Gewindeteil 73 aufweist, mit dem er beispielsweise in eine mit einem Gegengewinde versehene Ablauföffnung im Boden eines Metallfasses eingeschraubt werden kann.

In den Boden 74 des napfartigen Nippelkörpers ist dicht ein Führungsrohr 75 eingesetzt, das der Führung eines rohrförmigen Ventilkörpers 76 dient, der wieder am Ende durch einen Ventilteller 77 abgeschlossen ist und mit diesem mit einem Ventilsitz 78 oder einer Dichtung am Ende des Führungsrohres 75 zusammenwirkt. Gegenüberliegende Einlaßöffnungen 79 des Rohres 76 sind als Langlöcher ausgeführt, um einen kurzen Hub des Ventiles zu ermöglichen. Der Ringspalt 80 zwischen dem Führungsrohr 75 und dem Mantel 72, 73 des napfförmigen Nippels dient der Aufnahme einer Rückstellfeder 81, die sich mit ihrem anderen Ende in einer Handhabe 82 am Rohr 76 abstützt, die ihrerseits als zum Nippel 71 offene Kappe 83 ausgeführt ist, welche in den Ringspalt 80 eingeschoben werden kann. Zur Verriegelung des Ventiles in der Öffnungsstellung kann die Kappe Stifte od. dgl. 84 tragen, die bajonettverschlußartig durch Einsatzöffnungen 85 in Ringrillen 86 des Nippelkörpers eindrehbar sind. Zur Verriegelung könnten auch an der Kappe 82 bzw. 83 angebrachte Klauen in äußere Gegenrasten am Rohr 75 eingreifen.

Am Teil 82, der auf das Rohr 76 aufgeschraubt ist, ist ein ein Knie bildendes Ablaufrohr 87 angebracht. In der Schließstellung des Ventiles kann dieses Knie 87 so verdreht werden, daß es nach oben weist, wodurch mit einfachen Mitteln ein Nachtropfen der noch in den Rohren 76, 87 befindlichen Flüssigkeit verhindert wird.

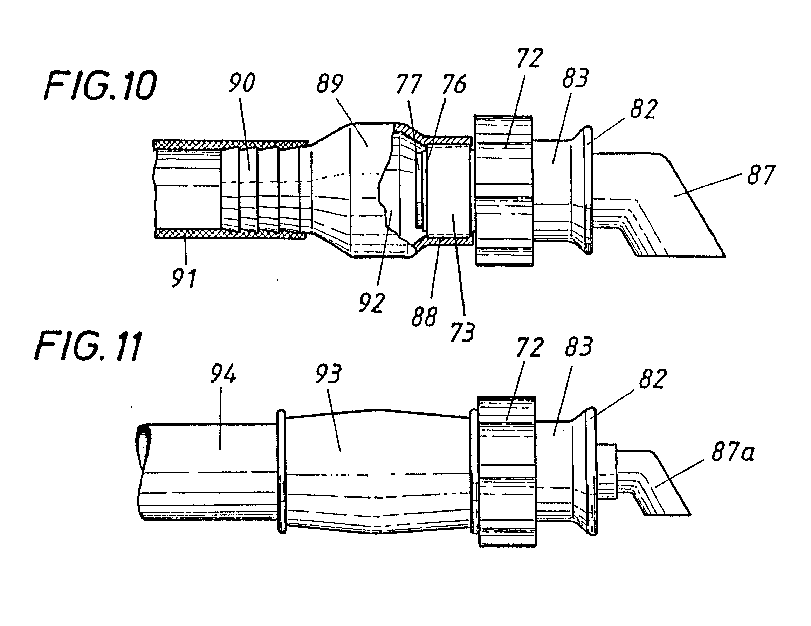

Nach Fig. 10 ist ein entsprechend Fig. 9 ausgebildetes Zapfventil mit dem Gewinde 73 in einen Rohransatz 88 einer Anschlußmuffe 89 eingeschraubt, die gegenüber dem Rohransatz 88 einen Schlauchanschlußstutzen 90 trägt, mit dem sie an einen Schlauch 91 angeschlossen ist. Die Anschlußmuffe 89 enthält eine Kammer 92, in die der Ventilkörper 76, 77 beim Öffnen des Ventiles eingeschoben werden kann. Der Schlauch 91 kann über einen Schraubanschluß an die

Ablauföffnung eines Fasses od. dgl. angeschlossen werden. Bringt man das Faß erhöht an, kann man mit Hilfe der Vorrichtung nach Fig. 10 auch dickflüssigere Medien ohne Zuhilfenahme einer Pumpe abzapfen.

Nach Fig. 11 ist ein gegenüber Fig. 9 leicht modifiziertes, beispielsweise mit einem Halbzoll- oder Dreiviertelzoll-Nippel versehenes Zapfventil über eine wieder das Ausschieben des Ventilkörpers und den Zulauf zu den Einlaßöffnungen des Ventilkörpers ermöglichende Muffe 93 an ein Wasserleitungsrohr 94 angeschlossen, in dem noch ein zusätzliches Absperrorgan vorgesehen sein kann. Das Auslaßknie 87a besitzt hier einen kleineren Querschnitt als bei den Ventilen nach den Fig. 9 und 10. Eine Wasserentnahme ist einfach durch Hineindrücken der Kappe 82, 83 möglich.

Ähnliche, kleine Ventile können als Entlüftungsventile an den Heizkörpern von Warmwasserheizungsanlagen angebracht werden.

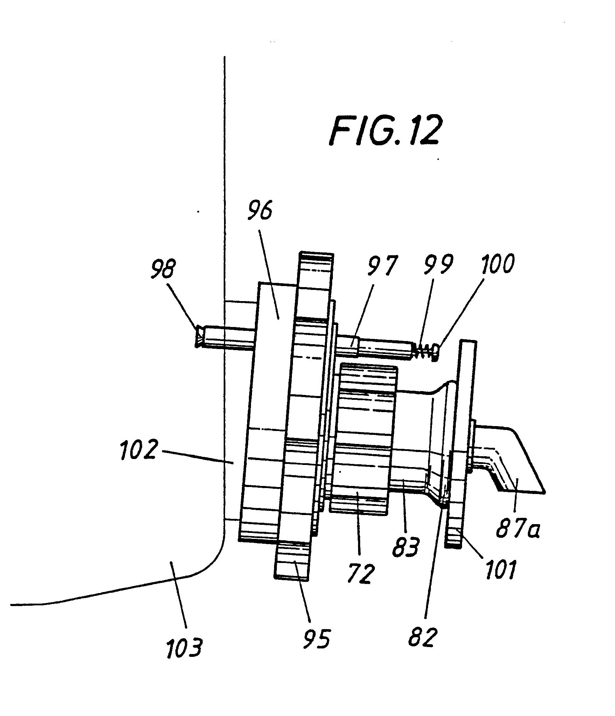

Bei der Ausführung nach Fig. 12 ist ein entsprechend Fig. 11 ausgebildetes Zapfventil exzentrisch in einer mit einer Handhabe 95 versehenen Überwurf-Schraubkappe 96 dicht befestigt. Neben dem Zapfventil ist durch die Schraubkappe eine Luftführungrohr 97 geführt, das am inneren Ende durch ein Kegelventil 98 abgeschlossen ist, welches durch eine Feder 99 in Schließstellung gehalten wird und durch einen Stößel 100 geöffnet werden kann. An der Handhabe ist eine sie verbreiternde Scheibe 101 angebracht. Die Schraubkappe 96 kann auf den mit einem entsprechenden Gewinde versehenen Hals 102 eines Kanisters 103 oder eines Camping- Wasserbehälters aus Kunststoff, der sonst keine Einlaßöffnungen aufweist, aufgeschraubt werden. Beim Öffnen des Zapfventiles wird gleichzeitig über den Stößel 100 auch das Kegelventil 98 geöffnet, so daß beim Ablauf der im Behälter enthaltenen Flüssigkeit gleichzeitig Luft in den Behälter eintreten kann und damit der Flüssigkeitsablauf nicht gestört wird.

**Patentansprüche**

1. Zapfventil, insbesondere für Großbehälter, mit einem rohrartigen Sperrkörper (14, 44, 76), von dem ein Rohrende eine Ablauföffnung (19, 47, 87) bildet, der im Bereich des anderen Endes wenigstens eine seitliche Einlaßöffnung (16, 79) aufweist und der in einer Führungsbohrung (13, 43, 75) eines Gehäuses (1, 1a, 1b; 2, 2a, 2b; 3, 3a, 3b, 24, 25, 75) über eine Handhabe kolbenartig aus einer Sperrstellung gegen eine Schließfeder (18, 46; 81) in eine Zapfstellung einschiebbar lagert, in der seine Einlaßöffnung (16, 79) aus der Führungsbohrung austritt, so daß sie mit dem Behälterinnenraum kommuniziert, wobei an dem von der Einlaßöffnung (16, 79) nach innen weisenden Teil des Sperrkörpers (14, 44, 76) ein Ventilteller (15, 77) vorgesehen ist, der in der Schließstellung an einem Ventilsitz anliegt und der Sperrkörper (14, 44, 76) in seiner Öffnungsstellung feststellbar ist, dadurch gekennzeichnet, daß die Führungsbohrung (13, 43, 75) für den rohrförmigen Sperrkörper (14, 44, 76) an einem mit einem eine Stütze für eine Montagedichtung (11, 11a, 11b) bildenden äußeren Kopfteil (10, 10a, 10b, 36, 72) versehenen Einschraubnippel (10, 35, 71) vorgesehen sind, daß der Sperrkörper (14, 44, 76) in der Führungsbohrung (13, 43, 75) verdrehbar lagert und daß der Eingriffsbereich einer der Feststellung des in der Öffnungsstellung befindlichen Sperrkörpers in wenigstens einer Drehlage dienenden Verriegelungsvorrichtung (21, 22, 48, 84, 85, 86) in einem zwischen der zur Handhabe gerichteten Außenseite des Gehäuses und der Handhabe selbst liegenden Bereich vorgesehen ist und die Verriegelungsvorrichtung entweder aus Magnethalterungen (21, 22) besteht, von denen ein Magnet (22) und ein zugeordneter Anker (21) am Gehäuse (3, 34) und an einem Sperrkörper (14) befestigten Betätigungsstück (20) bezogen auf die Achse des Sperrkörpers (14) exzentrisch angebracht sind, so daß sie nur in einer bestimmten Drehstellung des Sperrkörpers in Eingriff kommen können oder bei Ausbildung der Handhabe (45, 82, 83) als zum Nippel hin offene, die Ventilfeder (46, 81) aufnehmende und am Nippel (35, 45) geführte Kappe diese Kappe und der Nippel die Verriegelungsvorrichtung bildende Rasten und Gegenrasten (48, 84, 85, 86) tragen.

2. Zapfventil nach Anspruch 1, dadurch gekennzeichnet, daß die Kappe (82, 83) über eine bajonettverschlußartige, durch Verdrehen feststellbare bzw. lösbare Verriegelung (84, 85, 86) in der der Ventilöffnungsstellung entsprechenden Lage am Nippel (71) feststellbar ist.

3. Zapfventil nach Anspruch 1, dadurch gekennzeichnet, daß der Einschraubnippel (10) in einen abgedichtet in einen hölzernen Faßpipenkörper (1) eingesetzten Halterungsteil (2, 2a, 65) aus Metall oder Kunststoff eingeschraubt ist, wobei im Durchlaufweg der Flüssigkeit vor dem Ventileinlaß (15, 77) ein Fangsieb (8, 26, 51, 70) befestigt ist.

4. Zapfventil nach Anspruch 3, dadurch gekennzeichnet, daß das Fangsieb (70) als das ausschiebbare Ende (15b) des Sperrkörpers (14b) mit allseitigem Abstand umgebendes zylindrisches Sieb ausgebildet ist.

5. Zapfventil nach den Ansprüchen 3 und 4, dadurch gekennzeichnet, daß eine quer zur Durchlaufbohrung (4b) des Faßpipenkörpers (1, 2b, 3b) durchgehende Bohrung (63, 64) an beiden Enden dicht eingesetzte Einsätze (65, 69) mit versenkten Abdeckflanschen aufnimmt, wobei in den unteren Einsatz (65) der Gewindenippel (10b) eingeschraubt ist und der obere Einsatz (69) eine Halterung für das von Einsatz zu Einsatz reichende zylindrische Sieb (70) bildet.

6. Zapfventil nach einem der Ansprüche 1 bis 5, dadurch gekennzeichnet, daß ein am Sperrkörper (14) angebrachtes Betätigungsstück (20) zugleich als Drehschlüssel für den Kopfteil des Einschraubnippels (10) ausgebildet ist.

7. Zapfventil nach einem der Ansprüche 1 bis 6, dadurch gekennzeichnet, daß die Bohrung (13) des Einschraubnippels (10) gegen das Außenende zu eine Erweiterung für die Aufnahme einer Dichtungspaste aufweist

8. Zapfventil nach Anspruch 3, dadurch gekennzeichnet, daß der Faßpipenkörper (1, 2, 3) im Ventilbereich mit einem Metall- oder Kunststoffteil versehen ist, an dem ein aus Holz bestehendes Anschlußrohr (1a) auswechselbar befestigt ist, für das eine rohrförmige Auskleidung (52) aus Kunststoff mit einem in den das Ventil aufweisenden Metall- oder Kunststoffteil einschraubbaren Gewindeansatz (55) vorgesehen ist, wobei die rohrförmige Auskleidung (52) einen flanschartigen Kopfteil (53) trägt, der als Anschlag für das Ende des Anschlußrohres (1a) dient und von dem der Gewindeansatz (55) ausgeht.

9. Zapfventil nach Anspruch 8, dadurch gekennzeichnet, daß das vom Kopfteil abweisende Ende (58) der rohrförmigen Auskleidung (52) ein Außengewinde zum Aufschrauben einer das Anschlußrohr (1a) gegen den Kopfteil festspannenden Mutter aufweist und die rohrförmige Auskleidung (52) bzw. ein vom Kopfteil über das auf die Auskleidung (52) aufgeschobene Anschlußrohr ragender Bord (54) mit Längsrippen (61, 62) versehen ist, die als für den Eingriff in das Anschlußrohr (1a) bestimmte Verdrehungssicherung dienen.

10. Zapfventil nach einem der Ansprüche 1 bis 2, dadurch gekennzeichnet, daß es für eine horizontale Gebrauchslage an der Auslauföffnung eines liegenden Behälters vorgesehen und der Auslauf (47, 87) seines den horizontal verstellbaren Sperrkörper bildenden Rohres (44, 76) stumpf abgewinkelt oder gebogen ausgeführt ist.

11. Zapfventil nach Anspruch 10, dadurch gekennzeichnet, daß der Einschraubnippel (71) napfartig ausgebildet ist, wobei sein Mantel den als Drehhandhabe (72) ausgebildeten Kopfteil und das Einschraubgewinde trägt und ein mit Abstand innerhalb des Mantels angebrachtes, den Napfboden (74) durchsetzendes Führungsrohr (75) für den Sperrkörper (76) vorgesehen ist.

12. Zapfventil nach Anspruch 10 oder 11, dadurch gekennzeichnet, daß zur Verwendung des Zapfventiles an einer Flüssigkeitsleitung (91, 94) eine Anschlußmuffe (89, 93) vorgesehen ist, die zwischen einem Einschraubanschluß (88) für den Einschraubnippel (72) und einem diesem gegenüber angebrachten Schlauch- oder Rohranschluß (90) eine im Durchmesser vergrößerte Kammer (92) aufweist, in die der Sperrkörper (76, 77) einschiebbar ist.

13. Zapfventil nach Anspruch 1 und einem der Ansprüche 2, 6, 10 und 11, dadurch gekennzeichnet, daß das Zapfventil mit seinem Einschraubnippel (71) dicht in eine Durchführungsöffnung eines im Durchmesser größeren, abnehmbaren Verschlusses (95, 96) für einen Transportbehälter (101) eingeschraubt ist und durch den abnehmbaren Verschluß zusätzlich ein Luftzuführungsrohr (97) geführt, das über ein gemeinsam mit dem Zapfventil betätigbares Absperrorgan (98) verschließbar ist.

14. Mit einem Zapfventil nach einem der Ansprüche 1 bis 11 auszustattender Behälter aus Kunststoff, dadurch gekennzeichnet, daß die Behälterwandung (31, 40) im Bereich der Auslaßöffnung einen ins Behälterinnere ragenden Rohrstutzen (32, 39) aufweist, der durch eine ein- oder aufgesetzte durch Einführen oder Öffnen des Zapfventiles abstoßbare Kappe verschlossen ist.

15. Behälter nach Anspruch 14, dadurch gekennzeichnet, daß eine das Zapfventil abdeckende Haube (42) an einer Halterung der Behälterwandung befestigbar ist.

## Claims

1. A dispensing valve, particularly for large containers, comprising a tubular valve member (14, 44, 76), one tubular end of which constitutes an outlet opening (19, 47, 87) and which adjacent to its other end has at least one lateral inlet opening (16, 79) and which is mounted in a guide bore (13, 43, 75) of a housing (1, 1a, 1b; 2, 2a, 2b; 3a, 3b, 24, 25, 75) to be slidably movable against the force of a closing spring (18, 46; 81) like a piston by a handle from a closing position to a dispensing position, in which its inlet opening (16, 79) emerges from the guide bore and communicates with the interior of the container, wherein a valve plate (15, 77) is provided on that part of the valve member (14, 44, 76) which is inwardly directed from the inlet opening (16, 79) and in the closing position engages a valve seat, and the valve is adapted to be fixed in its open position, characterized in that the guide bore (13, 43, 75) for the tubular valve member (14, 44, 76) is provided on a screw-in nipple (10, 35, 71) which is provided with an outer head part (10, 10a, 10b, 36, 72) that constitutes a support for an assembling seal (11, 11a, 11b) the valve member (14, 44, 76) is rotatably mounted in the guide bore (13, 43, 75) and the region for engagement of locking means (21, 22, 48, 84, 85, 86) which serve to fix the valve member in at least one rotational position when it is in its open position which is provided in a region between the outside surface of the housing, which outside surface faces the handle, and the handle itself, the locking means consist either of magnet retainers (21, 22), including a magnet (22) and an associated armature (21), which are mounted on the housing (3, 34) and an actuating member (20) that is secured to the valve member (14) and said magnet and armature are eccentric with respect to the axis of the valve member (14) so that they can interengage only in a specific rotational position of the valve member, or, if the handle (45, 82, 83) consists of a cap which is open toward the nipple and receives the valve spring (46, 81) and is guided on the nipple (35, 45), said cap and the nipple carry indentations and detent elements (48, 84, 85, 86) which constitute the locking means.

2. A dispensing valve according to claim 1, characterized in that the cap (82, 83) is adjustable on the nipple (71) in a position corresponding to the open position of the valve by bayonet joint-like releasable locking means (84, 85, 86), which are adapted to be fixed by being rotated.

3. A dispensing calve according to claim 1, characterized in that the screw-in nipple (10) is screwed and inwardly sealed in a mounting member (2, 2a, 65), which consists of metal or plastics and has been inserted into a wooden bung body (1) and a retaining sieve (8, 26, 51, 70) is secured in the flow path of the liquid in front of the valve inlet (15, 77).

4. A dispensing valve according to claim 3, characterized in that the retaining sieve (70) consists of the cylindrical sieve, which is spaced all around the extensible end (15b) of the valve body (14b).

5. A dispensing valve according to claims 3 and 4, characterized in that a through bore (63, 64) which extends transversely to the flow bore (4b) of the bung body (1, 2b, 3b) contains at both ends tightly fitted inserts (65, 69) having countersunk cover flanges, the screw-threaded nipple (10b) has been screwed into the lower insert (65) and the upper insert (69) constitutes a holder for the cylindrical sieve (70), which extends from one insert to the other.

6. A dispensing valve according to any of claims 1 to 5, characterized in that an actuating member (20) which is attached to the valve member (14) serves also as a rotary wrench for the head part of the screw-in nipple (10)

7. A dispensing valve according to any of claims 1 to 6, characterized in that the bore (13) of the screw-in nipple (10) comprises towards its outer end an enlarged portion for receiving a sealing paste.

8. A dispensing valve according to claim 3, characterized in that the bung body (1, 2, 3) is provided adjacent to the valve with a metal or plastics part, to which a wooden tubular fitting (la) has replaceably been secured, which has associated with it a tubular liner (52) of plastics with a screw-threaded extension (55), which is adapted to be screwed into the metal or plastics part that is provided with the valve, the tubular liner (52) carries a flangelike head part (53), which serves as a stop for the end of the tubular fitting (1a) and from which the screw-threaded extension (53) extends.

9. A dispensing valve according to claim 8, characterized in that that end (58) of the tubular liner (52) which faces away from the head part comprises external screw threads for receiving a screwed-on nut for clamping the tubular fitting (1a) against the head part, and the tubular liner (52) or a flange (54) which protrudes from the head part over the tubular fitting that has been slidably fitted on the liner (52), is provided with longitudinal ribs (61, 62), which serve as rotation-preventing means for extending into the tubular fitting (1a).

10. A dispensing valve according to claim 1 or 2, characterized in that it is intended to be in a horizontal position for use at the outlet opening of a horizontal container and the outlet (47, 87) of that tube (44, 76) of the valve which constitutes the horizontally adjustable valve member extends at an obtuse angle or is curved.

11. A dispensing valve according to claim 10, characterized in that the screw-in nipple (71) is bowl-like, its shell carries the head part, which constitutes a rotary handle (72), and the screw-in threads, and a guide tube (75) for guiding the valve member (76) is provided and extends through the bottom (74) of the bowl.

12. A dispensing valve according to claim 10 or 11, characterized in that a connecting sleeve (89, 93) is provided for the dispensing valve when used at a liquid line (91, 94), the connecting sleeve (89, 93) a chamber (92), which is enlarged in diameter and disposed between a screw-in fitting (88) for the screw-in nipple (72) and a hose or tube fitting (90), which is mounted opposite to said screw-in fitting, and the valve member (76, 77) is adapted to be slidably inserted into said chamber.

13. A dispensing valve according to claim 1 and any of claims 2, 6, 10 and 11, characterized in that the screw-in nipple (71) of the dispensing valve is tightly screwed into a through opening of a removable closure (95, 96) for a transport container (101), which closure is larger in diameter, and an air supply tube (97) also extends through the removable closure and is adapted to be closed by a valve member (98) that is operable in unison with the dispensing valve.

14. A plastics container that is to be provided with a dispensing valve according to any of claims 1 to 11, characterized in that the container wall (31, 40) comprises adjacent to the outlet opening a tubular part and is adapted to be ejected in that the dispensing valve is inserted or opened.

15. A container according to claim 14, characterized in that a hood (42) which covers the dispensing valve is adapted to be fixed to a holder on the container wall.

**Revendications**

1. Cannelle de distribution, particulièrement pour grands réceptacles, comportant un corps de blocage à la manière d'un tube (14, 44, 76), dont une extrémité de tube forme une ouverture d'écoulement (19, 47, 87) et qui dans la zone de l'autre extrémité présente au moins une ouverture d'admission latérale (16, 79), qui est logé dans un alésage de guidage (13, 43, 75) d'un boîtier (1, 1a, 1b; 2, 2a, 2b; 3, 3a, 3b, 24, 25, 75) de manière à pouvoir être glissé par une manette à la manière d'un piston à partir d'une position de blocage contre un ressort de fermeture (18, 24; 81) en une position de tirage, dans laquelle son ouverture d'admission (16, 79) sort de l'alésage de guidage de manière à ce qu'elle communique avec l'intérieur du réceptacle, la partie dirigée vers l'intérieur de l'ouverture d'admission (16, 79) du corps de blocage, (14, 44, 76) présentant une tête de soupape (15, 77) qui dans la position de fermeture repose sur un siège de soupape et le corps de blocage (14, 44, 76) pouvant être fixé dans sa position d'ouverture, caractérisée en ce que l'alésage de guidage (13, 43, 75) pour le corps de blocage en forme de tube (14, 44, 76) est prévu sur un raccord fileté mâle (10, 35, 71) formant avec une tête extérieure (10, 10a, 10b, 36, 72) un appui pour un joint de montage (11, 11a, 11b), que le corps de blocage (14, 44, 76) dans l'alésage de guidage (13, 43, 75) est logé de manière à pouvoir tourner et que la zone d'engagement d'un dispositif de verrouillage (21, 22, 48, 84, 85, 86) servant à la fixation du corps de blocage se trouvant en position ouverte dans au moins une position de pivotement, se trouve dans la zone le côté extérieur du boîtier dirigé vers la manette et la manette elle-même et que le dispositif de verrouillage consiste ou en fixations magnétiques (21, 22) dont un aimant (22) et un induit associé (21) sur le boîtier (3, 34) et une pièce d'actionnement (20) fixée sur un corps de blocage (14) qui sont logés de manière excentrique par rapport à l'axe du corps de blocage (14) de manière à ce qu'ils ne s'engagent que dans une position de pivotement déterminé du corps de blocage ou qu'au cas où la manette (45, 82, 83) est formée comme capuchon ouvert vers le raccord fileté mâle, recevant la tête de soupape (46, 81) et étant guidé par le raccord fileté mâle (35, 45) ce capuchon et le raccord fileté mâle portent le profil et le contreprofil (48, 84, 85, 86) formant le dispositif de verrouillage.

2. Cannelle de distribution selon la revendication 1, caractérisée en ce que le capuchon peut être arrêté sur le raccord fileté mâle (71) par un verrouillage (82, 83, 86) à la manière d'une fermeture à baïonnette, qui peut être bloqué ou dégagé par pivotement dans la position sur le raccord fileté mâle (71) correspondant à la position d'ouverture de la soupape.

3. Cannelle de distribution selon la revendication 1, caractérisée en ce que le raccord fileté mâle (10) est vissé dans une pièce de fixation (2, 2a, 65) en métal ou en plastique, inséré de manière étanche dans un corps de pipe de tonneau en bois (1), dans le passage du liquide étant fixé un filtre (8, 26, 51, 70) en amont de l'admission de la soupape (15, 77).

4. Cannelle de distribution selon la revendication 3, caractérisée en ce que le filtre (70) est formé comme filtre cylindrique entourant avec un écartement de tous les côtés l'extrémité (15b) éjectable du corps de blocage (14b).

5. Cannelle de distribution selon les revendications 3 et 4, caractérisée en ce qu'un alésage traversant (63, 64) orienté transversalement par rapport à l'alésage de passage (4b) du corps de pipe de tonneau (1, 2b, 3b) possède aux deux extrémités des inserts (65, 69) placés de manière étanche qui sont pourvus de brides de couverture enfoncées, dans l'insert inférieur (65) étant vissé le raccord fileté mâle (10b) et l'insert supérieur (69) formant une fixation pour le filtre (70) cylindrique qui s'étend d'un insert à l'autre.

6. Cannelle de distribution selon l'une des revendications 1 à 5, caractérisée en ce qu'une pièce d'actionnement (20) logée sur le corps de blocage (14) est aussi formée comme clef de rotation pour la partie de tête du raccord fileté mâle (10).

7. Cannelle de distribution selon l'une des revendications 1 à 6, caractérisée en ce que l'alésage (13) du raccord fileté mâle (10) présente vers l'extrémité extérieure un évasement pour recevoir une pâte d'étanchéité.

8. Cannelle de distribution selon la revendication 3, caractérisée en ce que le corps de pipe de tonneau (1, 2, 3) est pourvu dans la zone de la soupape d'une pièce en métal ou en plastique à laquelle est fixée de manière à pouvoir être échangé un tube de raccordement (1a) en bois pour lequel est prévu un revêtement en forme de tube (52) en plastique comportant une pièce filetée (55) pouvant être vissée dans la pièce en métal ou en plastique présentant la soupape, le revêtement en forme de tube (52) portant une partie de tête (53) à la manière d'une bride qui sert de butée pour l'extrémité du tube de raccordement (1a) et qui part de la pièce filetée (55).

9. Cannelle de distribution selon la revendication 8, caractérisée en ce que l'extrémité (58) à l'opposé de pièce de tête du revêtement en forme de tube (52) présente un filet extérieur pour visser un écrou serrant le tube de raccordement (1a) contre la pièce de tête et que le revêtement en forme de tube (52) ou un bord dépassant à partir de la pièce de tête pardessus le tube de raccordement glissé sur le revêtement (52) est pourvu de nervures longitudinales (61, 62) qui servent au blocage contre la torsion destiné à s'engager dans le tube de raccordement (1a).

10. Cannelle de distribution selon les revendications 1 ou 2, caractérisée en ce qu'elle est prévue pour une position d'utilisation horizontale à l'ouverture d'écoulement d'un réceptacle couché et que l'écoulement (47, 87) de son tube (44, 76) formant le corps de blocage qui peut être réglé en horizontale est coudé à angle obtus ou courbé.

11. Cannelle de distribution selon la revendication 10, caractérisée en ce que le raccord fileté mâle (71) est formé comme une cuvette, sa paroi portant comme manette pivotante (72) la partie de tête et le filet, et qu'est prévu, à distance à l'intérieur de la paroi, le tube de guidage (75), traversant le fond de la cuvette (74), pour le corps de blocage (76).

12. Cannelle de distribution selon les revendications 10 ou 11, caractérisée en ce que pour l'utilisation de la cannelle sur une conduite de liquide (91, 94), un manchon de raccordement (89, 93) est prévu qui présente une chambre (92) à diamètre agrandi entre l'embout fileté femelle (88) pour le raccord fileté mâle (72) et un raccordement de tuyau ou de tube (90) se trouvant à l'opposé de ce dernier, chambre dans laquelle le corps de blocage (76, 77) peut être inséré.

13. Cannelle de distribution selon la revendication 1 et une des revendications 2, 6, 10 et 11, caractérisée en ce que la cannelle de distribution est vissée par son raccord fileté mâle (71) de manière étanche dans une ouverture de passage d'une fermeture amovible (95, 26) de diamètre plus important, pour un réceptacle de transport et que par la fermeture amovible un tuyau d'amenée d'air (97) traverse, qui peut être fermé par l'intermédiaire d'un organe de verrouillage (98) pouvant être actionné simultanément avec la cannelle.

14. Réceptacle en plastique à équiper d'une cannelle de distribution selon l'une des revendications 1 à 11, caractérisé en ce que les parois du réceptacle (31, 40) présentent dans la zone de l'ouverture d'écoulement une tubulure (32, 39) pénétrant dans l'intérieur du réceptacle, qui est fermée par un capuchon emboîté ou glissé dessus et qui peut être enlevé par l'introduction ou l'ouverture de la cannelle.

15. Réceptacle selon la revendication 14, caractérisée en ce qu'un capuchon (42) couvrant la cannelle peut être fixé à une fixation dans la paroi du réceptacle.

FIG.3

FIG.2

FIG.1

FIG.4

FIG.5

FIG.6

FIG.7

FIG.8

0 119 991

## FIG. 9

FIG.10

FIG.11

0 119 991

# FIG.12